# FASCICULE DE BREVET EUROPEEN

(11) **EP 2 964 933 B1**
(45) Date de publication et mention de la délivrance du brevet: **30.05.2018**
(21) Numéro de dépôt: 14713214.6
(22) Date de dépôt: 05.03.2014
(51) Int. Cl.: F02C 7/232, F02C 9/26, F23K 5/14, F23R 3/36

(54) **DISPOSITIF DE DOSAGE COMPACT POUR INJECTEUR A DEUX CIRCUITS DE CARBURANT POUR UNE TURBOMACHINE D'AERONEF**
KOMPAKTE DOSIERUNGSVORRICHTUNG FÜR EINEN INJEKTOR MIT ZWEI BRENNSTOFFKREISLÄUFEN FÜR EINE FLUGZEUGTURBOMASCHINE
COMPACT DOSING DEVICE FOR AN INJECTOR WITH TWO FUEL CIRCUITS FOR AN AIRCRAFT TURBOMACHINE

(30) Priorité: 05.03.2013 FR 1351946; 18.10.2013 FR 1360197
(43) Date de publication de la demande: 13.01.2016
(73) Titulaire: Snecma, 75015 Paris (FR)
(72) Inventeur: CHABAILLE, Christophe, F-77550 Moissy Cramayel Cedex (FR); LOVAL, Sébastien, F-77550 Moissy Cramayel Cedex (FR)
(74) Mandataire: Brevalex
(86) Numéro de dépôt international: PCT/FR2014/050499
(87) Numéro de publication internationale: WO 2014/135797

(56) Documents cités:
- EP-A2- 0 150 619
- US-A- 4 726 396
- US-A- 5 732 730

## Description

### DOMAINE TECHNIQUE

La présente invention se rapporte au domaine des dispositifs de dosage de carburant pour des injecteurs de carburant pour turbomachine d'aéronef. Elle concerne plus précisément les injecteurs à double circuits de combustible, à savoir un circuit primaire pour les petits débits et un circuit secondaire pour les débits plus élevés.

L'invention s'applique à tous les types de turbomachines d'aéronef, en particulier les turboréacteurs et les turbocompresseurs.

### ETAT DE LA TECHNIQUE ANTERIEURE

Un injecteur à double circuits de combustible est par exemple connu du document FR 2 817 017. Classiquement, il est prévu un clapet d'arrêt, également dénommé clapet d'étanchéité car il permet d'assurer une liaison étanche interdisant au carburant, situé dans le circuit carburant, de pénétrer dans la chambre de combustion durant l'arrêt du moteur. Lorsque le différentiel de pression de part et d'autre de ce clapet est tel qu'il entraîne son ouverture, le carburant est délivré d'une part au circuit primaire de l'injecteur, et d'autre part à un clapet doseur donnant l'accès au circuit secondaire de l'injecteur. Ce clapet doseur permet le passage du carburant lorsque le différentiel de pression de carburant de part et d'autre de celui-ci atteint une valeur élevée, par exemple 7 bars. En fonction de son déplacement, dépendant du différentiel de pression, le clapet doseur régule la quantité de carburant injecté dans la chambre de combustion.

Si cette solution classique donne satisfaction, elle reste perfectible en termes de masse globale, d'encombrement, et de risque d'interactions nuisibles entre les deux clapets.
Le document US 5 732 730 A décrit un dispositif selon le préambule de la revendication 1.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un dispositif de dosage de carburant pour un injecteur de carburant de turbomachine d'aéronef, le dispositif comprenant une ouverture pour l'entrée du carburant, un organe mobile d'obturation de l'ouverture, ainsi que des moyens élastiques de rappel conçus pour rappeler l'organe d'obturation en direction d'une position de fermeture dans laquelle l'organe obture de façon étanche ladite ouverture, l'organe étant conçu pour se déplacer de sa position de fermeture sous l'effet de la pression du carburant s'appliquant sur cet organe.

Le dispositif de dosage comprend une première sortie destinée à communiquer avec un circuit primaire de l'injecteur ainsi qu'une seconde sortie destinée à communiquer avec un circuit secondaire de l'injecteur, et il est conçu de sorte que jusqu'à un niveau déterminé de déplacement de l'organe d'obturation en direction d'une position d'ouverture maximale, l'organe d'obturation permet au carburant provenant de ladite ouverture de rejoindre ladite première sortie. De plus, seulement au-delà dudit niveau déterminé de déplacement de l'organe, ce dernier permet au carburant provenant de ladite ouverture de rejoindre ladite seconde sortie.

Selon l'invention, le dispositif de dosage comprend :
- un corps creux extérieur ;
- un corps creux intermédiaire logé dans le corps extérieur, ladite ouverture étant pratiquée dans ledit corps intermédiaire pourvu d'un siège de réception de l'organe d'obturation ;
- ledit organe d'obturation logé mobile à coulissement dans ledit corps intermédiaire ;
- un espace de circulation de carburant agencé entre les corps intermédiaire et extérieur, le corps intermédiaire étant pourvu d'orifices de passage du carburant de l'intérieur de ce corps intermédiaire vers ledit espace de circulation de carburant, ledit espace de circulation communiquant avec ladite première sortie ;
- une ouverture secondaire pour le passage du carburant, prévue sur le corps intermédiaire, l'ouverture secondaire étant destinée à être obturée par l'organe mobile tant qu'il n'a pas atteint ledit niveau déterminé de déplacement, et destiné à être libérée lorsque l'organe mobile se trouve entre le niveau déterminé de déplacement et sa position d'ouverture maximale, ladite ouverture secondaire communiquant avec ladite seconde sortie.

L'invention est particulièrement avantageuse en ce qu'elle met en oeuvre un unique organe mobile d'obturation permettant de commander l'alimentation des circuits primaire et secondaire de l'injecteur. Par rapport à la solution à deux clapets en série de l'art antérieur, cela réduit les possibles interactions entre les deux clapets. L'invention permet également de réduire l'encombrement, la masse globale, le nombre de pièces, et les frottements entre celles-ci.

De préférence, la section de passage du carburant au niveau l'ouverture secondaire est évolutive en fonction de la position relative de l'organe par rapport à cette ouverture.

De préférence, au-delà dudit niveau déterminé de déplacement de l'organe d'obturation, ce dernier permet au carburant provenant de ladite ouverture de rejoindre ladite seconde sortie et ladite première sortie. Par conséquent, même si cela pourrait en être autrement, le dispositif est conçu de sorte que la première sortie continue à être alimentée en carburant lorsque la seconde sortie est alimentée.

De préférence, lesdits moyens élastiques de rappel comprennent au moins un premier ressort et un second ressort, ledit second ressort étant agencé de manière à ne pas être sollicité par l'organe d'obturation sur au moins une partie de la course de celui-ci depuis sa position de fermeture, et lesdits premier et second ressorts sont agencés de manière à être chacun sollicité par l'organe d'obturation lorsque celui-ci se trouve audit niveau déterminé de déplacement. D'autres configurations sont néanmoins possibles, sans sortir du cadre de l'invention. En particulier, il pourrait s'agir d'un unique ressort. Néanmoins, la solution à deux ressorts ou plus, telle que présentée ci-dessus, permet une plus grande latitude de réglage pour le dispositif de dosage.

De préférence, lesdits premier et second ressorts sont agencés en parallèle. Les premiers et seconds ressorts sont notamment situés selon l'axe du dispositif, en particulier de manière concentrique autour de cet axe.

Selon une caractéristique additionnelle, le second ressort présente une raideur plus importante que le premier ressort. En variante, le second ressort peut être davantage précontraint que le premier ressort en position de fermeture.

De préférence, l'organe mobile définit une cavité à l'intérieur de laquelle le carburant est destiné à transiter pour rejoindre ladite seconde sortie. Il pourrait alternativement être prévu de faire circuler le carburant extérieurement à l'organe mobile d'obturation, en direction de la seconde sortie.

Selon une particularité de réalisation, ledit second ressort est agencé entre une butée du corps intermédiaire et une pièce d'appui, et l'organe mobile d'obturation présente une pièce d'appui complémentaire destinée à contacter ladite pièce d'appui seulement à partir et au-delà dudit niveau déterminé de déplacement, en direction de sa position d'ouverture maximale.

En variante, ledit second ressort est agencé entre une butée et une pièce d'appui de l'organe mobile, l'organe mobile d'obturation présentant un élément d'engagement configuré pour engager la pièce d'appui seulement à partir et au-delà dudit niveau déterminé de déplacement en direction de la position d'ouverture maximale de l'organe mobile d'obturation.

La pièce d'appui est notamment apte à solliciter le second ressort en compression en fonction de la pression exercée par le carburant dans le dispositif de dosage sur l'organe mobile.

Le niveau déterminé de déplacement de l'organe mobile d'obturation est alors atteint par l'engagement de pièce d'appui par l'élément d'engagement après avoir consommé au moins en partie le jeu présent au repos entre la pièce d'appui de l'organe mobile et l'élément d'engagement.

Dans cette configuration, la pièce d'appui est de préférence une soupape. La soupape assure ainsi une fonction d'étanchéité au dispositif de dosage de carburant, seule ou en commun avec d'autres éléments de l'organe mobile.

Selon une caractéristique supplémentaire, l'organe mobile d'obturation comprend notamment un piston et la pièce d'appui.

Lorsque la pièce d'appui présente une partie de forme oblongue, par exemple une soupape à tige, l'élément d'engagement est de préférence une rainure dans le piston. L'invention a également pour objet un injecteur de carburant pour turbomachine d'aéronef comprenant au moins un dispositif de dosage tel que décrit ci-dessus, ladite première sortie communiquant avec un circuit primaire de l'injecteur, et la seconde sortie communiquant avec un circuit secondaire de ce même injecteur.

L'invention a également pour objet une chambre de combustion de turbomachine d'aéronef comprenant une pluralité d'injecteurs de carburant tels que décrits ci-dessus.

Enfin, l'invention a pour objet une turbomachine d'aéronef comprenant une telle chambre de combustion.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;

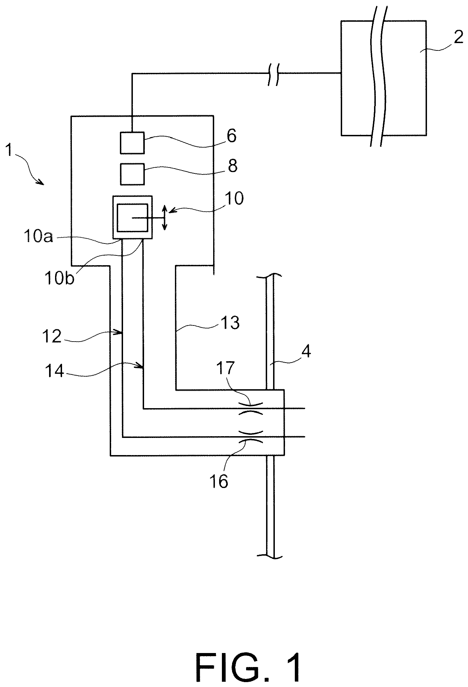

- la figure 1 représente une vue schématique d'un injecteur de carburant pour turbomachine, selon un mode de réalisation préféré de la présente invention ;

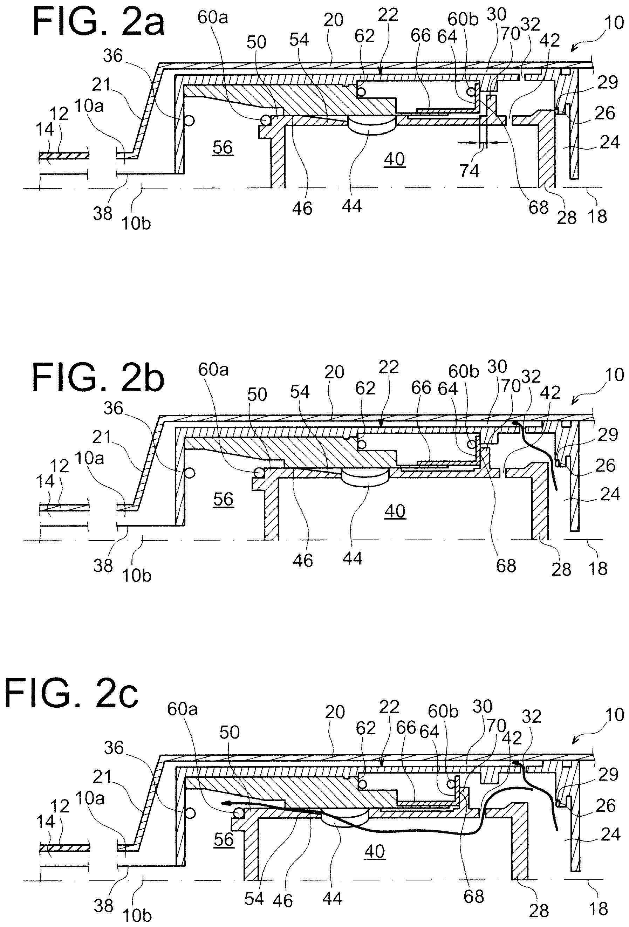

- les figures 2a à 2c représentent de manière plus détaillée le dispositif de dosage de l'injecteur de la figure 1, en demi-coupe, selon un premier mode de réalisation de l'invention, dans différentes configurations adoptées au fur et à mesure que le différentiel de pression de carburant s'accentue entre l'amont et l'aval du dispositif de dosage ; et

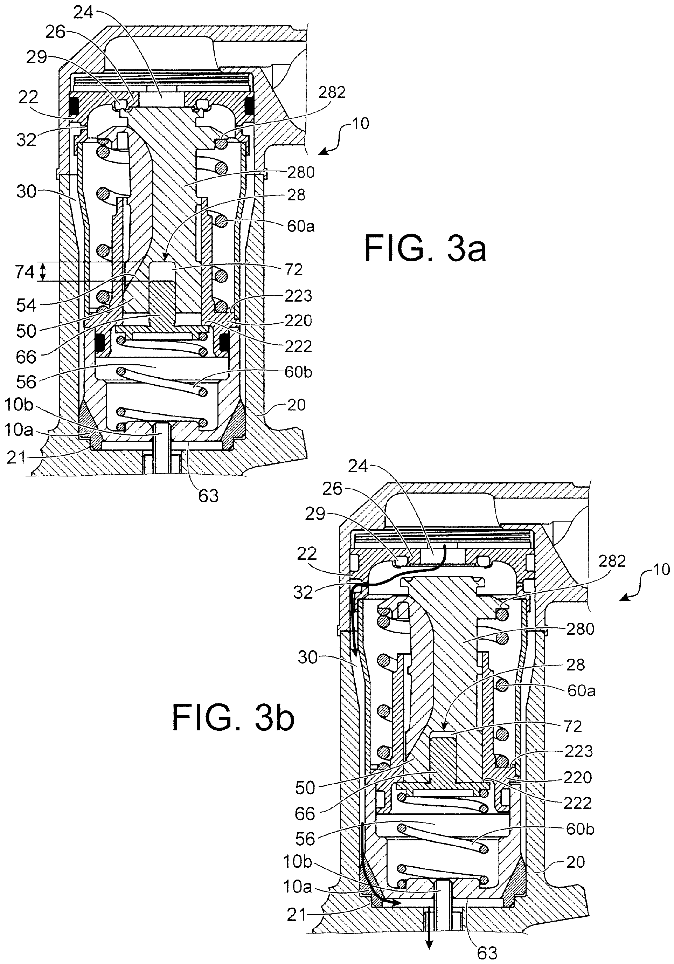

- les figures 3a à 3c représentent de manière plus détaillée le dispositif de dosage de l'injecteur de la figure 1, en coupe, selon un deuxième mode de réalisation de l'invention, dans différentes configurations similaires à celles des figures 2a à 2c et adoptées au fur et à mesure que le différentiel de pression de carburant s'accentue entre l'amont et l'aval du dispositif de dosage.

### EXPOSÉ DÉTAILLÉ DE MODES DE RÉALISATION PRÉFÉRÉS

En référence à la figure 1, il est représenté un injecteur de carburant 1 pour turbomachine d'aéronef, selon un mode de réalisation préféré de l'invention.

L'injecteur 1, du type « multimode » (plusieurs circuits d'alimentation, ici double circuit de combustible), est raccordé en amont à des moyens de stockage de carburant, tel qu'un réservoir 2. A son extrémité aval, l'injecteur traverse un fond de chambre de combustion 4, d'une manière classique et connue de l'homme du métier.

Globalement, l'injecteur 1 comprend, de l'amont vers l'aval dans le sens d'écoulement du carburant au travers de cet injecteur, un filtre 6, un diaphragme 8 et un dispositif de dosage 10. Le dispositif 10 comprend une première sortie de carburant 10a ainsi qu'une seconde sortie de carburant 10b distincte de la première. La première sortie 10a alimente un circuit primaire de carburant 12, tandis que la seconde sortie alimente un circuit secondaire de carburant 14, destiné à la circulation de plus gros débits en direction de la chambre de combustion. A chaque circuit 12, 14, à proximité de l'extrémité aval de l'injecteur, il est associé une vrille 16, 17 (de l'anglais « swirler ») pour la pulvérisation / mise en rotation du carburant.

Tous les éléments précités de l'injecteur sont agencés dans une enveloppe extérieure 13, qui prend une forme générale de doigt ou de canne.

En référence plus spécifiquement aux figures 2a et 3a, il est représenté de façon détaillée le dispositif de dosage 10 en configuration de fermeture, dans laquelle le carburant provenant du réservoir ne peut pénétrer au travers de ce dispositif.

Le dispositif 10 est formé à l'aide d'une pluralité d'éléments concentriques d'axe 18 correspondant à l'axe de l'injecteur.

Il s'agit tout d'abord d'un corps creux extérieur 20, de section circulaire constante sur une majeure partie de sa longueur. Le corps creux extérieur 20 du premier mode de réalisation présente un rétrécissement conique 21 au niveau de l'extrémité aval. Plus généralement, le corps extérieur 20 présente une forme de tube centré sur l'axe 18, et définit extérieurement la première sortie 10a.

A l'intérieur du corps 20, il est logé un corps creux intermédiaire 22, ce dernier pouvant être réalisé à partir d'une ou plusieurs pièces fixées les unes aux autres. En partie amont, le corps intermédiaire 22 présente une ouverture 24 pour l'entrée du carburant, centrée sur l'axe 18. A proximité de cette ouverture, le corps 22 définit un siège 26 de réception d'un organe mobile d'obturation 28, le siège étant pourvu d'un joint torique d'étanchéité 29.

Le corps intermédiaire 22 définit un espace de circulation annulaire de carburant 30 agencé entre ce corps intermédiaire et le corps extérieur 20. De plus, il est prévu que le corps intermédiaire présente des orifices de passage du carburant 32 de l'intérieur de ce corps intermédiaire 22 vers l'espace de circulation de carburant 30. Ces orifices, situés sur la paroi latérale du corps 22, sont agencés à proximité de l'ouverture axiale 24 permettant l'entrée du carburant dans le dispositif de dosage.

En partie aval, le corps 22 présente un épaulement 36 qui se poursuit par un tube 38 définissant intérieurement la première sortie annulaire de carburant 10a avec le corps extérieure 20, et définissant extérieurement la seconde sortie de carburant 10b de section circulaire centrée sur l'axe 18. Par conséquent, en partie aval, l'espace de circulation de carburant 30 communiquant avec la première sortie 10a.

Comme évoqué ci-dessus, le dispositif de dosage 10 comporte en outre l'organe d'obturation 28 logé mobile à coulissement dans le corps intermédiaire 20, selon l'axe 18.

L'organe mobile 28 présente une extrémité amont comprenant une surface de pression amont, ayant sensiblement la forme d'une plaque de pression dans le premier mode de réalisation, sur laquelle le carburant peut exercer une force de déplacement. L'organe 28 est creux, définissant une cavité 40 à l'intérieur de laquelle le carburant est destiné à transiter pour rejoindre la seconde sortie 10b, comme cela sera détaillé ci-après. Pour ce faire, la paroi latérale de l'organe 28 présente des orifices d'entrée de carburant 42 situés à proximité de la plaque de pression, ainsi que des orifices de sortie de carburant 44 situés plus en aval sur cette même paroi latérale délimitant la cavité 40.

En partie aval du corps intermédiaire 22, il est réalisé une ouverture secondaire 46 pour le passage du carburant. Dans les configurations montrées sur les figures 2a et 3a, cette ouverture 46 est obturée par une extrémité aval 50 de l'organe mobile 28, de section circulaire de forme complémentaire de celle de l'ouverture. Des moyens d'étanchéité peuvent être ajoutés si nécessaire.

Entre cette extrémité aval 50 et les orifices de sortie de carburant 44, l'organe mobile d'obturation 28 présente une partie 54 de section rétrécie qui, lorsqu'elle se situe en regard de l'ouverture secondaire 46, permet de libérer celle-ci en assurant ainsi le passage du carburant en direction de la seconde sortie 10b communiquant avec cette ouverture secondaire. Plus précisément, l'ouverture secondaire 46 débouche dans un espace 56 situé sous la partie aval de l'organe mobile, cet espace 56 débouchant quant à lui dans la seconde sortie 10b.

Le dispositif 10 comporte par ailleurs des moyens élastiques de rappel exerçant une force conduisant l'organe 28 à être rappelé vers sa position de fermeture montrée sur la figure 2a, dans laquelle l'organe 28 est en appui sur le siège 26.

Les moyens élastiques des modes de réalisation préférés des figures 2a à 2c et 3a à 3c comprennent un premier ressort 60a et un second ressort 60b. Les premier 60a et second ressorts 60b sont notamment situés selon l'axe 18 du dispositif 10 de manière concentrique autour de cet axe 18.

En référence plus spécifiquement aux figures 2a à 2c, le premier ressort 60a est en appui d'une part contre l'épaulement 36 du corps intermédiaire 22, et d'autre part contre l'extrémité aval de l'organe mobile 28. Le second ressort 60b est en appui contre une butée aval 62 du corps intermédiaire, et contre une butée amont 64 d'une pièce d'appui 66 montée à coulissement sur le corps intermédiaire, selon l'axe 18. De préférence, la butée amont 64 est en appui amont contre un épaulement 68 du carter intermédiaire 22. Aussi, le second ressort 60b pousse la butée amont 64 contre l'épaulement 68, ce ressort étant donc précontraint même dans sa position détendue montrée sur la figure 2a.

En outre, l'organe mobile 28 présente une pièce d'appui complémentaire 70 en forme de collerette, destinée à contacter la butée 64 de la pièce d'appui 66, seulement à partir et au-delà d'un niveau déterminé de déplacement de l'organe 28, comme cela sera détaillé ci-après. Aussi, en position de fermeture, il existe un jeu axial 74 entre la collerette 70 et la butée amont 64.

Le premier ressort 60a du premier mode de réalisation est situé en aval du second ressort 60b dans le dispositif de dosage 10 de carburant. De plus, le premier ressort 60a est plus proche de l'axe 18 du dispositif de dosage 10 que le second ressort 60b.

Le mode de réalisation représenté aux figures 3a à 3c se distingue de celui représenté aux figures 2a à 2c en ce que le premier ressort 60a est situé en amont du second ressort 60b dans le dispositif de dosage 10. Par ailleurs, le second ressort 60b est plus proche de l'axe 18 du dispositif de dosage 10 que le premier ressort 60a.

A la figure 3a, le premier ressort 60a est en appui d'une part contre un rebord 282 de l'organe mobile 28 et d'autre part contre un épaulement amont 223 d'un corps creux aval 220 du corps creux intermédiaire 22.

Le second ressort 60b du second mode de réalisation est agencé entre une butée fixe 63 du dispositif 10 et une pièce d'appui 66 de l'organe mobile d'obturation 28, l'organe mobile d'obturation 28 présentant un élément d'engagement 72 configuré pour engager la pièce d'appui 66.

L'élément d'engagement 72 sert à engager la pièce d'appui 66 seulement à partir et au-delà dudit niveau déterminé de déplacement en direction de la position d'ouverture maximale de l'organe mobile d'obturation 28 de manière similaire à la pièce d'appui complémentaire 70 du premier mode de réalisation.

A la figure 3a, l'organe mobile d'obturation 28 comprend un piston 280 et la pièce d'appui 66. Le piston 280 comprend alors l'élément d'engagement 72. Afin que l'organe mobile 28 permette au carburant provenant de l'ouverture 24 de rejoindre la seconde sortie 10b au-delà dudit niveau déterminé de déplacement de l'organe 28, un jeu 74 est prévu à la figure 3a entre l'élément d'engagement 72 et la pièce d'appui 66.

La pièce d'appui 66 du second mode de réalisation est une soupape, plus précisément une soupape à tige. La soupape 66 est configurée pour engager de manière hermétique un épaulement aval 222 du corps creux aval 220. L'épaulement aval 222 se situe notamment en aval de l'épaulement amont 223 dans le dispositif de dosage 10.

Aussi le second ressort 60b pousse la soupape 66 contre l'épaulement 222, ce ressort 60b est donc précontraint même dans sa position détendue montrée sur la figure 3a.

L'élément d'engagement 72 est une rainure borgne pratiquée dans le piston 280, la tige de la soupape 66 étant notamment susceptible d'être engagée en butée dans la rainure 72 en position d'ouverture maximale.

En référence à présent aux figures 2a à 2c et aux figures 3a à 3c, il va être décrit le fonctionnement du dispositif de dosage 10.

Tant que le différentiel de pression de carburant entre l'amont et l'aval du dispositif 10 ne dépasse pas une valeur seuil, l'organe 28 reste en position de fermeture telle que montrée sur les figures 2a et 3a. En d'autres termes, la force de rappel déployée par le premier ressort 60a est suffisante pour conserver l'organe 28 plaqué contre son siège 26, cette force étant en effet supérieure à celle résultant de la différence de pression entre la pression de carburant s'appliquant contre la surface de pression amont de l'organe 28, et la pression de carburant régnant dans la chambre de combustion, sensiblement identique à celle du carburant contactant de l'extrémité aval de l'organe 28.

De préférence, l'étanchéité conférée par l'organe mobile en position de fermeture peut être conservée jusqu'à un différentiel de pression de l'ordre de 3,5 bars.

Lorsque ce différentiel augmente, la force résultante sur l'organe 28 conduit ce dernier à solliciter le ressort 60a, et donc à se déplacer de sa position de fermeture vers une position maximale d'ouverture. Dès le début de ce déplacement schématisé sur la figure 2b et sur la figure 3b, qui s'effectue en comprimant le ressort 60a, l'organe 28 libère l'ouverture 24 et active le premier circuit de carburant. En effet, le carburant provenant du réservoir peut alors cheminer successivement à travers l'ouverture 24, les orifices de passage du carburant 32 du corps intermédiaire 22, l'espace annulaire 30, puis à travers la première sortie 10a avant de rejoindre le premier circuit 12. Durant cette première phase de course de l'organe mobile 28, seul le premier ressort 60a est comprimé, le jeu 74 se consommant progressivement au fur et à mesure que l'organe se déplace vers l'aval. Toujours durant cette même première phase, l'extrémité aval 50 de l'organe 28 traverse l'ouverture secondaire 46 tout en assurant son obturation, empêchant ainsi le passage du carburant vers le circuit secondaire, qui reste inactif.

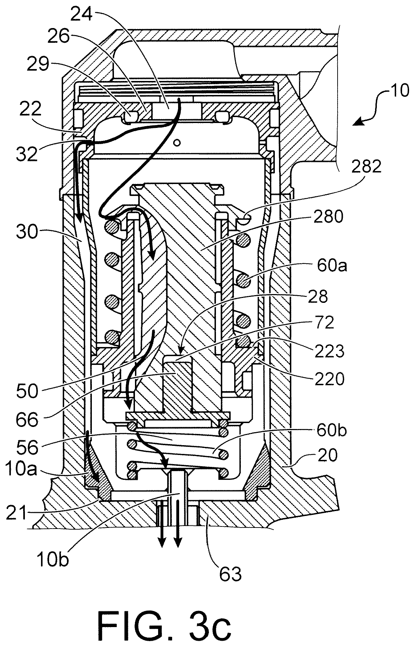

Ce n'est que lorsque l'organe mobile 28 a atteint un niveau déterminé de déplacement vers l'aval que le circuit secondaire de l'injecteur est activé. Ce niveau déterminé de déplacement, atteint dans une configuration intermédiaire entre celles représentées sur les figures 2b, 3b,2c et 3c, est obtenu lorsque la partie 54 de section rétrécie de l'organe arrive en regard de l'ouverture secondaire 46, l'espace créé entre la paroi de cette ouverture et la surface extérieure de l'organe permettant le passage de carburant. A titre indicatif, il peut ici s'agir d'une partie 54 présentant des fentes axiales de passage de carburant, espacées circonférentiellement les unes des autres. De plus, ces fentes peuvent être inclinées axialement de manière à se rapprocher de l'axe 18 en allant vers l'amont, de façon à augmenter le débit de passage du carburant au fur et à mesure que l'organe 28 se déplace vers l'aval. Le dispositif 10 assure par conséquent une fonction de dosage précis, qui dépend du niveau de déplacement de l'organe 28 le long de l'axe 18. A cet égard, il est noté que la figure 2c montre l'organe mobile 28 dans la position d'ouverture maximale, permettant l'obtention d'un débit maximal de carburant en sortie de l'injecteur.

Dès que l'organe 28 atteint son niveau déterminé de déplacement, qui traduit par exemple un différentiel de pression de l'ordre de 7 bars, le carburant provenant du réservoir peut circuler à travers successivement les orifices d'entrée de carburant 42, la cavité 40, les orifices de sortie de carburant 44, l'ouverture secondaire 46, puis à travers l'espace 56 débouchant dans la seconde sortie 10b communiquant avec le second circuit 14 de l'injecteur. A ces niveaux élevés de débits où le carburant circule dans le second circuit, il continue aussi à circuler dans le premier circuit puisque les orifices de passage du carburant 32 du corps intermédiaire 22 restent alimentés par une partie du carburant traversant l'ouverture 24.

En référence plus spécifiquement aux figures 2a à 2c, le niveau déterminé de déplacement de l'organe est atteint après que le second ressort 60b ait été sollicité via la collerette 70, par appui de celle-ci contre la butée 64 de la pièce coulissante 66.

Dans le deuxième mode de réalisation, le niveau déterminé de déplacement de l'organe mobile d'obturation 28 est atteint par l'engagement de la soupape 66 par le piston après avoir consommé au moins en partie le jeu 74 entre une extrémité de la tige de la soupape 66 et le fond de la rainure 72 dans le piston 280.

Plus généralement, pour atteindre ce niveau de déplacement dans le premier et dans le second mode de réalisation, l'organe doit contrer la force de rappel développée par chacun des deux ressorts 60a, 60b agencés en parallèle. Le niveau déterminé de déplacement, correspondant au point de commutation du dispositif de dosage, peut être atteint dès le début de la compression du second ressort 60b, ou bien après une course de l'organe au cours de laquelle les deux ressorts sont sollicités en parallèle.

Bien entendu, diverses modifications, tout en respectant le cadre des revendications ajoutées, peuvent être apportées par l'homme du métier à l'invention qui vient d'être décrite, uniquement à titre d'exemples non limitatifs.

## Revendications

1. Dispositif de dosage de carburant (10) pour un injecteur de carburant de turbomachine d'aéronef, le dispositif comprenant une ouverture (24) pour l'entrée du carburant, un organe mobile d'obturation (28) de l'ouverture, ainsi que des moyens élastiques de rappel (60a, 60b) conçus pour rappeler l'organe mobile d'obturation (28) en direction d'une position de fermeture dans laquelle l'organe obture de façon étanche ladite ouverture, l'organe mobile d'obturation (28) étant conçu pour se déplacer de sa position de fermeture sous l'effet de la pression du carburant s'appliquant sur cet organe,
dans lequel ledit dispositif de dosage (10) comprend une première sortie (10a) destinée à communiquer avec un circuit primaire (12) de l'injecteur ainsi qu'une seconde sortie (10b) destinée à communiquer avec un circuit secondaire (14) de l'injecteur,
dans lequel le dispositif de dosage (10) est conçu de sorte que jusqu'à un niveau déterminé de déplacement de l'organe mobile d'obturation (28) en direction d'une position d'ouverture maximale, l'organe d'obturation permet au carburant provenant de ladite ouverture (24) de rejoindre ladite première sortie (10a), et
dans lequel l'organe mobile d'obturation (28) permet au carburant provenant de ladite ouverture (24) de rejoindre ladite seconde sortie (10b), seulement au-delà dudit niveau déterminé de déplacement de l'organe mobile d'obturation (28), **caractérisé en ce que** le dispositif de dosage (10) comprend :
- un corps creux extérieur (20) ;
- un corps creux intermédiaire (22) logé dans le corps extérieur (20), ladite ouverture (24) étant pratiquée dans ledit corps intermédiaire pourvu d'un siège (26) de réception de l'organe mobile d'obturation (28) ;
- ledit organe mobile d'obturation (28) logé mobile à coulissement dans ledit corps intermédiaire (22) ;
- un espace (30) de circulation de carburant agencé entre les corps intermédiaire et extérieur (22, 20), le corps intermédiaire étant pourvu d'orifices (32) de passage du carburant de l'intérieur de ce corps intermédiaire (22) vers ledit espace de circulation de carburant (30), ledit espace de circulation communiquant avec ladite première sortie (10a) ;
- une ouverture secondaire (46) pour le passage du carburant, prévue sur le corps intermédiaire (22), l'ouverture secondaire étant destinée à être obturée par l'organe mobile (28) tant qu'il n'a pas atteint ledit niveau déterminé de déplacement, et destiné à être libérée lorsque l'organe mobile d'obturation (28) se trouve entre le niveau déterminé de déplacement et sa position d'ouverture maximale, ladite ouverture secondaire (46) communiquant avec ladite seconde sortie (10b).

2. Dispositif selon la revendication 1, **caractérisé en ce qu'**au-delà dudit niveau déterminé de déplacement de l'organe mobile d'obturation (28), ce dernier permet au carburant provenant de ladite ouverture (24) de rejoindre ladite seconde sortie (10b) et ladite première sortie (10a).

3. Dispositif selon la revendication 1 ou la revendication 2, **caractérisé en ce que** lesdits moyens élastiques de rappel comprennent au moins un premier ressort (60a) et un second ressort (60b), ledit second ressort étant agencé de manière à ne pas être sollicité par l'organe mobile d'obturation (28) sur au moins une partie de la course de celui-ci depuis sa position de fermeture, et **en ce que** lesdits premier et second ressorts (60a, 60b) sont agencés de manière à être chacun sollicité par l'organe mobile d'obturation (28) lorsque celui-ci se trouve audit niveau déterminé de déplacement, et **en ce que** lesdits premier et second ressorts (60a, 60b) sont de préférence agencés en parallèle.

4. Dispositif selon la revendication 3, **caractérisé en ce que** ledit second ressort (60b) est agencé entre une butée (62) du corps intermédiaire et une pièce d'appui (66), et **en ce que** l'organe mobile d'obturation (28) présente une pièce d'appui complémentaire (70) destinée à contacter ladite pièce d'appui (66) seulement à partir et au-delà dudit niveau déterminé de déplacement, en direction de sa position d'ouverture maximale.

5. Dispositif selon la revendication 3, **caractérisé en ce que** ledit second ressort (60b) est agencé entre une butée fixe (63) du dispositif (10) et une pièce d'appui (66) de l'organe mobile d'obturation (28), et **en ce que** l'organe mobile d'obturation (28) présente un élément d'engagement (72) configuré pour engager la pièce d'appui (66) seulement à partir et au-delà dudit niveau déterminé de déplacement en direction de la position d'ouverture maximale de l'organe mobile d'obturation (28).

6. Dispositif selon l'une quelconque des revendications précédentes, **caractérisé en ce que** l'organe mobile d'obturation (28) définit une cavité (40) à l'intérieur de laquelle le carburant est destiné à transiter pour rejoindre ladite seconde sortie (10b).

7. Injecteur (1) de carburant pour turbomachine d'aéronef comprenant au moins un dispositif de dosage (10) selon l'une quelconque des revendications précédentes, ladite première sortie (10a) communiquant avec un circuit primaire (12) de l'injecteur, et la seconde sortie (10b) communiquant avec un circuit secondaire (14) de ce même injecteur.

8. Chambre de combustion de turbomachine d'aéronef comprenant une pluralité d'injecteurs de carburant (1) selon la revendication 7.

9. Turbomachine d'aéronef comprenant une chambre de combustion selon la revendication 8.

## Patentansprüche

1. Brennstoff-Dosierungsvorrichtung (10) für einen Brennstoff-Einspritzer eines Turbotriebwerks für Flugzeuge, wobei die Vorrichtung eine Öffnung (24) für den Einlass des Brennstoffs, ein bewegbares Absperrorgan (28) für die Öffnung sowie federnde Rückstellmittel (60A, 60B) aufweist, welche dazu vorgesehen sind, das bewegbare Absperrorgan (28) in Richtung einer Schließstellung zurückzustellen, in der das Organ diese Öffnung dicht verschließt, wobei das bewegbare Absperrorgan (28) dazu vorgehen ist, sich unter der Wirkung des Drucks des Brennstoffs, der auf dieses Organ einwirkt, aus seiner Schließstellung zu verschieben,
wobei die genannte Dosierungsvorrichtung (10) einen ersten Auslass (10a) aufweist, der dazu bestimmt ist, mit einem Primärkreislauf (12) des Einspritzers zu kommunizieren, sowie einen zweiten Auslass (10b) aufweist, der dazu bestimmt ist, mit einem Sekundärkreislauf (14) des Einspritzers zu kommunizieren,
wobei die Dosierungsvorrichtung (10) dergestalt konzipiert ist, dass das bewegbare Absperrorgan (28) es bis zu einem bestimmten Grad des Verschiebens dieses Absperrorgans in Richtung einer maximalen Öffnungsstellung ermöglicht, dass der Brennstoff, der aus der genannten Öffnung (24) kommt, den genannten ersten Auslass (10a) erreicht, und
wobei das bewegbare Absperrorgan (28) es ermöglicht, dass der Brennstoff, der aus der genannten Öffnung (24) kommt, den genannten zweiten Auslass (10b) nur jenseits des genannten bestimmten Grades des Verschiebens des Absperrorgans (28) erreicht,
**dadurch gekennzeichnet,**
**dass** die Dosierungsvorrichtung (10) umfasst:
- einen äußeren Hohlkörper (20),
- einen Zwischen-Hohlkörper (22), der in dem äußeren Hohlkörper (20) aufgenommen ist, wobei die genannte Öffnung (24) in diesem Zwischen-Hohlkörper ausgeführt ist, der mit einem Aufnahmesitz (26) für das bewegbare Absperrorgan (28) versehen ist,
- das genannte bewegbare Absperrorgan (28), das gleitend in diesem Zwischenkörper (22) aufgenommen ist,
- einen Brennstoff-Zirkulationsraum (30), der zwischen dem Zwischenkörper und dem äußeren Körper (22, 20) angeordnet ist, wobei der Zwischenkörper mit Öffnungen (32) für den Durchlass des Brennstoffs aus dem Inneren dieses Zwischenkörpers (22) in den genannten Brennstoff-Zirkulationsraum (30) versehen ist, wobei dieser Brennstoff-Zirkulationsraum mit dem ersten Auslass (10a) kommuniziert,
- eine Sekundäröffnung (46) für den Durchlass des Brennstoffs, die an dem Zwischenkörper (22) vorgesehen ist, wobei die Sekundäröffnung dazu vorgesehen ist, durch das bewegbare Organ (28) verschlossen zu werden, solange es den genannten bestimmten Grad des Verschiebens nicht erreicht hat, und dazu vorgesehen ist, freigegeben zu werden, sobald das bewegbare Absperrorgan (28) sich zwischen dem bestimmten Grad des Verschiebens und seiner maximalen Öffnungsstellung befindet, wobei diese Sekundäröffnung (46) mit dem genannten zweiten Auslass (10b) kommuniziert.

2. Vorrichtung nach Anspruch 1,
**dadurch gekennzeichnet,**
**dass** jenseits des genannten bestimmten Grades des Verschiebens des Absperrorgans (28) letzteres es ermöglicht, dass der Brennstoff, der aus der genannten Öffnung (24) kommt, den genannten zweiten Auslass (10b) und den genannten ersten Auslass (10a) erreicht.

3. Vorrichtung nach Anspruch 1 oder Anspruch 2,
**dadurch gekennzeichnet,**
**dass** die genannten federnden Rückstellmittel aus mindestens einer ersten Feder (60a) und einer zweiten Feder (60b) bestehen, wobei diese zweite Feder dergestalt angeordnet ist, dass sie durch das bewegbare Absperrorgan (28) über mindestens einen Teil dessen Hubs von seiner Schließstellung ausgehend nicht belastet wird, und dass die genannte erste und zweite Feder (60a, 60b) dergestalt angeordnet sind, dass sie beide durch das bewegbare Absperrorgan (28) belastet werden, wenn dieses sich in dem genannten bestimmten Grad des Verschiebens befindet, und dass die genannte erste und zweite Feder (60a, 60b) vorzugsweise parallel angeordnet sind.

4. Vorrichtung nach Anspruch 3,
**dadurch gekennzeichnet,**
**dass** die genannte zweite Feder (60b) zwischen einem Anschlag (62) des Zwischenkörpers und einem Anschlagstück (66) angeordnet ist, und dass das bewegbare Absperrorgan (28) ein komplementäres Anschlagstück (70) aufweist, das dazu vorgehen ist, mit dem genannten Anschlagstück (66) erst ab und jenseits des genannten bestimmten Grades des Verschiebens in Richtung seiner maximalen Öffnungsstellung in Berührung zu kommen.

5. Vorrichtung nach Anspruch 3,
**dadurch gekennzeichnet,**
**dass** die genannte zweite Feder (60b) zwischen einem festen Anschlag (63) der Vorrichtung (10) und einem Anschlagstück (66) des bewegbaren Absperrorgans (28) angeordnet ist, und dass das bewegbare Absperrorgan (28) ein Eingriffselement (72) aufweist, das so gestaltet ist, dass es erst ab und jenseits des genannten bestimmten Grades des Verschiebens in Richtung der maximalen Öffnungsstellung des bewegbaren Absperrorgans (28) mit dem Anschlagstück (66) in Berührung kommt.

6. Vorrichtung nach einem der vorherigen Ansprüche,
**dadurch gekennzeichnet,**
**dass** das bewegbare Absperrorgan (28) einen Hohlraum bildet, durch den der Brennstoff strömen muss, um zu dem genannten zweiten Auslass (10b) zu gelangen.

7. Brennstoff-Einspritzer (1) für Flugzeug-Turbotriebwerke mit mindestens einer Dosierungsvorrichtung (10) nach einem der vorherigen Ansprüche, wobei der genannte erste Auslass (10a) mit einem Primärkreislauf (12) des Einspritzers kommuniziert und der zweite Auslass (10b) mit einem Sekundärkreislauf (14) des selben Einspritzers kommuniziert.

8. Brennkammer für Flugzeug-Turbotriebwerke mit einer Vielzahl von Brennstoff-Einspritzern (1) nach Anspruch 7.

9. Turbotriebwerk für Flugzeuge mit einer Brennkammer nach Anspruch 8.

## Claims

1. Fuel metering device (10) for a fuel injector of an aircraft turbomachine, with the device comprising an opening (24) for the fuel intake, a movable sealing member (28) for sealing the opening, as well as elastic return means (60a, 60b) designed to return the movable sealing member (28) in the direction of a closed position in which the member seals off said opening, with the movable sealing member (28) being designed to be displaced from its closed position under the effect of the fuel pressure that is applied on this member,
wherein said metering device (10) comprises a first outlet (10a) intended to communicate with a primary circuit (12) of the injector as well as a second outlet (10b) intended to communicate with a secondary circuit (14) of the injector,
wherein the metering device (10) is designed in such a way that up to a defined level of displacement of the movable sealing member (28) in the direction of a maximum open position, the sealing member allows the fuel coming from said opening (24) to reach said first outlet (10a), and
wherein the movable sealing member (28) allows the fuel coming from said opening (24) to reach said second outlet (10b), only beyond said defined level of displacement of the movable sealing member (28),
**characterised in that** the metering device (10) comprises:
- a hollow outer body (20);
- a hollow intermediate body (22) housed in the outer body (20), said opening (24) being made in said intermediate body provided with a seat (26) for receiving the movable sealing member (28);
- said movable sealing member (28) housed slidably movable in said intermediate body (22);
- a fuel flow space (30) provided between the intermediate and outer bodies (22, 20), the intermediate body being provided with orifices (32) for the fuel to pass from the inside of this intermediate body (22) to said fuel flow space (30), said flow space communicating with said first outlet (10a);
- a secondary opening (46) for the fuel to pass, provided on the intermediate body (22), the secondary opening being intended to be sealed by the movable sealing member (28) provided it has not reached said defined level of displacement, and intended to be released when the movable sealing member (28) is between the defined level of displacement and its maximum opening position, said secondary opening (46) communicating with said second outlet (10b).

2. Device according to claim 1, **characterised in that** beyond said defined level of displacement of the movable sealing member (28), the latter allows the fuel coming from said opening (24) to reach said second outlet (10b) and said first outlet (10a).

3. Device according to claim 1 or claim 2, **characterised in that** said elastic return means comprise at least one first spring (60a) and a second spring (60b), with said second spring being arranged in such a way as to not be solicited by the movable sealing member (28) over at least a portion of the travel of the latter from its closed position, and **in that** said first and second springs (60a, 60b) are arranged in such a way as to each be solicited by the movable sealing member (28) when the latter is at said defined level of displacement, and **in that** said first and second springs (60a, 60b) are preferably arranged in parallel.

4. Device according to claim 3, **characterised in that** said second spring (60b) is provided between a stop (62) of the intermediate body and a support part (66), and **in that** the movable sealing member (28) has an additional support part (70) intended to contact said support part (66) only starting from and beyond said defined level of displacement, in the direction of its maximum open position.

5. Device according to claim 3, **characterised in that** said second spring (60b) is provided between a fixed stop (63) of the device (10) and a support part (66) of the movable sealing member (28), and **in that** the movable sealing member (28) has an engaging element (72) configured to engage the support part (66) only starting from and beyond said defined level of displacement in the direction of the maximum open position of the movable sealing member (28).

6. Device as claimed in any preceding claim, **characterised in that** the movable sealing member (28) defines a cavity (40) inside of which the fuel is intended to transit in order to reach said second outlet (10b).

7. Fuel injector (1) for aircraft turbomachine comprising at least one metering device (10) as claimed in any preceding claim, said first outlet (10a) communicating with a primary circuit (12) of the injector, and the second outlet (10b) communicating with a secondary circuit (14) of this same injector.

8. Aircraft turbomachine combustion chamber comprising a plurality of fuel injectors (1) according to claim 7.

9. Aircraft turbomachine comprising a combustion chamber according to claim 8.
